# EUROPEAN PATENT APPLICATION

(11) **EP 4 760 587 A2**
(43) Date of publication of application: **17.06.2026**
(21) Application number: 25222674.1
(22) Date of filing: 11.12.2025
(51) Int. Cl.: G06K 7/10

(54) **RADIO FREQUENCY IDENTITY (RFID) TAG READER FOR USE IN LICENSED SPECTRUM**

(30) Priority: 13.12.2024 US 202418981200
(71) Applicant: T MOBILE INNOVATIONS LLC, Overland Park KS 66251-2100 (US)
(72) Inventor: FANG, Zheng, Mclean, 22102 (US); HOU, Pei, Centreville, 20120 (US); PERLOW, Harry William, Palm Harbor, 34683 (US); SATAPATHY, Durga Prasad, Ashburn, 20148 (US)
(74) Representative: Suddaby, Mark Edward

(57) **Abstract**

A radio frequency identity (RFID) tag reader. The reader comprises an antenna; a radio transceiver coupled to the antenna, wherein the radio transceiver is configured to transmit and receive in a cellular radio frequency band; a memory; a processor coupled to the radio transceiver and to the memory; and an application stored in a non-transitory portion of the memory. When executed by the processor, the application sends a query message via the radio transceiver and the antenna to a plurality of RFID tags; and receives a plurality of query response messages via the radio transceiver and antenna from the plurality of RFID tags, wherein at least some of the query response messages are encoded using different pseudo-random number (PN) codes and receiving the plurality of query response messages comprises demodulating at least some of the query response message using different PN codes.

## Description

### BACKGROUND

Radio frequency identity (RFID) tags are passive semiconductor devices that may be affixed to various items for conducting electronic scans and inventory control functions. The RFID tags typically do not have self-contained electric power sources and harvest electrical power from ambient radio frequency fields. When powered and/or hailed by an RFID tag reader device, the RFID tags may broadcast information wirelessly via an antenna and radio transmitter on-board the RFID tag. In some cases, RFID tags may be queried by reader devices and transmit their information in unlicensed frequency spectrum bands. Radio transmissions in unlicensed frequency spectrum bands may be subject to government regulations restricting maximum transmission power levels which tend to impose severe limitations on the distances over which an RFID tag reader can successfully provide electrical power in a radio frequency field and/or can successfully read information from an RFID tag.

### SUMMARY

In an embodiment, a radio frequency identity (RFID) tag reader. The RFID tag reader comprises an antenna; a radio transceiver coupled to the antenna, wherein the radio transceiver is configured to transmit and receive in a cellular radio frequency band; a memory; a processor coupled to the radio transceiver and to the memory; and an application stored in a non-transitory portion of the memory. When executed by the processor, the application sends a first query message via the radio transceiver and the antenna to a plurality of RFID tags, wherein the first query message identifies a first frequency range the RFID tags are directed to respond in; and receives a first plurality of query response messages via the radio transceiver and antenna in the first frequency range from some of the plurality of RFID tags. The application, when executed, further sends a second query message via the radio transceiver and the antenna to the plurality of RFID tags, wherein the second query message identifies a second frequency range the RFID tags are directed to respond in, wherein the second frequency range is different from the first frequency range; and receives a second plurality of query response messages via the radio transceiver and antenna in the second frequency range from some of the plurality of RFID tags, whereby the RFID tag reader ad hoc adapts the communication frequency between the RFID tag reader and the plurality of RFID tags.

In another embodiment, a radio frequency identity (RFID) tag reader is disclosed. The RFID tag reader comprises an antenna; a radio transceiver coupled to the antenna, wherein the radio transceiver is configured to transmit and receive in a cellular radio frequency band; a memory; a processor coupled to the radio transceiver and to the memory; and an application stored in a non-transitory portion of the memory. When executed by the processor, the application sends a query message via the radio transceiver and the antenna to a plurality of RFID tags; and receives a plurality of query response messages via the radio transceiver and antenna from the plurality of RFID tags, wherein at least some of the query response messages are encoded using different pseudo-random number (PN) codes and receiving the plurality of query response messages comprises demodulating at least some of the query response messages using different PN codes.

In yet another embodiment, a radio frequency identity (RFID) tag reader is disclosed. The RFID tag reader comprises an antenna, wherein the antenna comprises a plurality of antenna elements; a radio transceiver coupled to the antenna, wherein the radio transceiver is configured to transmit and receive in a cellular radio frequency band and is configured to control the antenna to cause the antenna elements to steer a beam of the antenna; a memory; a processor coupled to the radio transceiver and to the memory; and an application stored in a non-transitory portion of the memory. When executed by the processor, the application commands the radio transceiver to steer the beam of the antenna in a first direction; sends a first query message via the radio transceiver and the antenna to a first plurality of RFID tags while the beam of the antenna is directed in the first direction; and receives a first plurality of query response messages via the radio transceiver and antenna from at least some of the first plurality of RFID tags while the beam of the antenna is directed in the first direction. When executed by the processor, the application further, after receiving the first plurality of query responses, commands the radio transceiver to steer the beam of the antenna in a second direction that is different from the first direction; sends a second query message via the radio transceiver and the antenna to a second plurality of RFID tags while the beam of the antenna is directed in the second direction; and receives a second plurality of query response messages via the radio transceiver and antenna from at least some of the second plurality of RFID tags while the antenna is directed in the second direction.

In yet another embodiment, a radio frequency identity (RFID) tag reader is disclosed. The RFID tag reader comprises an antenna; a radio transceiver coupled to the antenna, wherein the radio transceiver is configured to transmit and receive in a cellular radio frequency band and is configured to control the antenna to steer a beam of the antenna; a memory; a processor coupled to the radio transceiver and to the memory; and an application stored in a non-transitory portion of the memory. When executed by the processor, the application steers the beam of the antenna in a first direction sends a first query message via the radio transceiver and the antenna to a plurality of RFID tags; receives a first plurality of query response messages via the radio transceiver and the antenna from at least some of the first plurality of RFID tags; and coordinates with a second RFID tag reader to identify a coverage area assigned to the RFID tag reader; The application further, based on the coverage area assigned to the RFID tag reader, steers the beam of the antenna in a second direction so as to communicate with a second plurality of RFID tags located within the coverage area assigned to the RFID tag reader; sends a second query message via the radio transceiver and the antenna to a second plurality of RFID tags while the beam of the antenna is directed in the second direction; and receives a second plurality of query response messages via the radio transceiver and antenna from at least some of the second plurality of RFID tags while the antenna is directed in the second direction.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1A is a block diagram of a system according to an embodiment of the disclosure.
FIG. 1B is a block diagram of an RFID tag according to an embodiment of the disclosure.
FIG. 2 is a flow chart of a method according to an embodiment of the disclosure.
FIG. 3 is a flow chart of another method according to an embodiment of the disclosure.
FIG. 4 is a flow chart of yet another method according to an embodiment of the disclosure.
FIG. 5 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

Reading information from RFID tags is a challenge for RFID reader devices (referred to in some contexts herein simply as readers). Often a great many RFID tags are present in the same environment, and the radio transmissions of RFID tag information at substantially the same time makes it difficult to receive the RFID tag information. Said in other words, interference between RFID tag radio transmissions can defeat the ability of readers to receive the RFID tag information. The present disclosure teaches a number of different technical modifications of traditional RFID tag readers that can help reduce this reception problem. Some of these new approaches can be implemented by individual readers. Other of these new approaches involve coordination and collaboration among a plurality of readers to reduce this reception problem.

In an embodiment, the RFID tag reader transmits electrical power as an electromagnetic field in a radio frequency that corresponds to a licensed cellular communication spectrum. In contrast to unlicensed spectrum such as the instrumentation, scientific, and medical (ISM) frequency band, radio transmissions by authorized RFID tag readers can use higher power in the licensed cellular communication spectrum. This higher transmission power provides the ability to deliver power to RFID tags at a greater distance than would lower transmission power associated with unlicensed spectrum bands. Additionally, the RFID tag reader transmitting commands at higher power can promote RFID tags hearing these commands at a greater distance than would be possible with a reader transmitting commands at a lower power. Thus, generally, transmitting electromagnetic field energy and transmitting operational commands (e.g., reader queries) by RFID tag readers in licensed spectrum bands can promote RFID tag readers communicating with RFID tags that are separated from the RFID tag readers by greater distances.

In an embodiment, the RFID tag reader may feature an antenna comprising a plurality of antenna elements that promote antenna beam formation, increasing a gain of the antenna in the direction of the antenna beam, and promote directional steering of the antenna beam. In an embodiment, the antenna may utilize circular polarization which may improve reception and transmission in the presence of randomly positioned antennas of RFID tags. In an embodiment, a radio transceiver coupled to the antenna may practice frequency hopping and/or ad hoc frequency band usage, whereby to dynamically adapt to a changing radio environment (e.g., adapt to moving objects in the environment such as fork lifts or opening of loading dock doors). In an embodiment, an RFID tag reader may employ code division multiple access (CDMA) modulation techniques to the end of receiving transmissions from multiple RFID tags simultaneously and demodulating different transmissions from different RFID tags using different pre-defined pseudo-random noise (PN) codes.

In an embodiment, a plurality of RFID tag readers may intercommunicate with each other to improve reading RFID tags. For example, two or more RFID tag readers may each direct their antenna beams to a same physical location, each receive transmission of RFID tag information, and collaborate to superimpose the received transmissions to make a stronger received signal and/or to error correct each other's partially received transmission. In an embodiment, a plurality of RFID tag readers may handshake with each other to determine and map a plurality of reading areas associated with each different RFID tag reader. When an RFID tag reader goes out of service, the other RFID tag readers can detect this out-of-service condition and collaborate to divide up and share coverage for reading RFID tags located in the area previously allocated to the reading area of the out-of-service RFID tag reader.

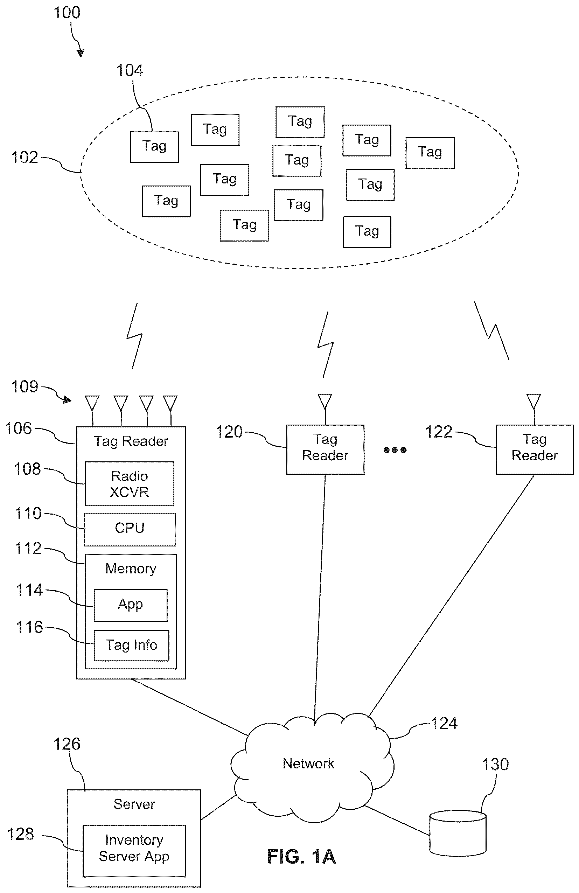

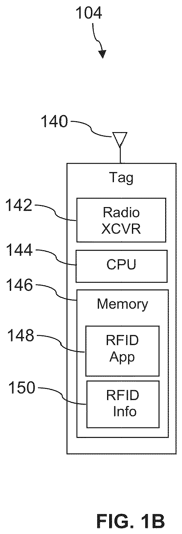

Turning now to FIG. 1A and FIG. 1B, a system 100 is described. In an embodiment, system 100 comprises an environment 102 that encloses a plurality of RFID tags 104. The RFID tags 104 may be affixed to products and/or product packages that are located within the environment 102. In an embodiment, the environment 102 may be a warehouse or a fulfillment center. The system 100 further comprises a first RFID tag reader 106, a second RFID tag reader 120, and a third RFID tag reader 122. The readers 106, 120, 122 may be considered to be located within the environment 102 and/or be part of the environment 102. While three RFID tag readers 106, 120, 122 are illustrated in FIG. 1A, it is understood that the system 100 may comprise just a single RFID tag reader 106. The system 100 may comprise just two RFID tag readers 106, 120. The system 100 may comprise more than three RFID tag readers and less than five hundred RFID tag readers.

Each tag reader 106, 120, 122 may comprise a radio transceiver communicatively coupled to an antenna 109. The antenna 109 may comprise a plurality of antenna elements. In an embodiment, the antenna 109 may comprise two antenna elements, three antenna elements, four antenna elements, five antenna elements, six antenna elements, seven antenna elements, eight antenna elements, nine antenna elements, or ten antenna elements. In an embodiment, the antenna 109 may comprise at least eleven antenna elements and less than fifty antenna elements. The antenna elements may comprise dipoles. The antenna elements may comprise slots in a slot antenna array. The RFID tag reader 106, 120, 122 further comprises a radio transceiver 108 that is communicatively coupled to the antenna 109. The radio transceiver 108 may adapt the communicative coupling with the antenna 109 whereby to cause the antenna 109 to generate a focused beam and to steer the antenna beam in desired directions. For example, the radio transceiver 108 can introduce phase offsets in signals sent to antenna elements to generate a focused antenna beam and steer the antenna beam in a desired direction. It is understood that the antenna 109 is a reciprocal device and that the antenna beam forming and steering applies to both transmission and to reception activities. In an embodiment, the antenna 109 may operate using circular polarization.

The RFID tag reader 106, 120, 122 further comprises a processor 110 and a memory 112. A non-transitory portion of the memory 112 stores a tag reader application 114 that may be executed by the processor 110 to steer the antenna beam of the antenna 109, to transmit an electrical power electromagnetic field to RFID tags 104, to transmit commands to RFID tags 104, and to receive information from the RFID tags 104. The memory 112 may store tag information 116, at least temporarily before off-loading this information.

The RFID tag readers 106, 120, 122 may be communicatively coupled to a network 124. The readers may be coupled to the network 124 via a wired communication link, for example by a wired Ethernet connection. The readers may be communicatively coupled to the network 124 by a wireless communication link. The network 124 comprises one or more private networks, one or more public networks, or a combination thereof. The RFID tag readers 106, 120, 122 may communicate with each other via the network 124 and with an application 128 executing on a computer or server 126. Computer systems are described further hereinafter. The RFID tag readers 106, 120, 122 can also be viewed as computer systems, albeit with some special features such as the antenna 109 and radio transceiver 108 that may not be typical of many computer systems. The system 100 also comprises a data store 130.

As illustrated in FIG. 1B, each of the RFID tags 104 may comprise one or more antenna 140, a radio transceiver 142, a processor 144, and a memory 146. A non-transitory portion of the memory 146 comprises an RFID tag application 148 and RFID information 150. The RFID information 150 may comprise one or more of an identity of a product (e.g., an electronic product code), an identity of an original equipment manufacturer (OEM) of the product, a date of manufacture of the product, a receipt date (e.g., a date the product was received into the environment 102), and an electronic serial number of the product (e.g., a tag identity (TID)). It is to be noted that the identification of the product of a given RFID tag 104 may be shared with a plurality of other RFID tags 104 (e.g., there may be many instances of the same model of smart phone in a fulfillment center) while the electronic serial number of the given RFID tag 104 may be unique. In an embodiment, the RFID information 150 may comprise transaction information, such as transactions performed on a product associated with the RFID tag 104. These transactions may comprise moving the RFID tag 104 (and product to which the tag is affixed) within the environment 102, state changes of the RFID tag 104, and storage conditions experienced by the RFID tag 104 (and product to which the tag is affixed) such as temperature, humidity, irradiation by an ultraviolet source.

In an embodiment, the RFID tag 104 is a passive RFID tag 104, meaning it has no autonomous electric power source and receives electric power via its one or more antenna 140 from an ambient radio frequency electromagnetic field. The ambient radio frequency electromagnetic field may be generated by one or more of the readers 106, 120, 122 or by another power emitter within the environment 102. The RFID tag application 148 may be executed when the RFID tag 104 is powered by the ambient radio frequency electromagnetic field.

The readers 106, 120, 122 may periodically prompt the RFID tags 104 to transmit their information (e.g., product identity, OEM identity, date of manufacture, receipt date, and/or electronic serial number). The readers 106, 120, 122 may transmit a hailing signal to the RFID tags 104 to prompt them to transmit their information. In an embodiment, the readers 106, 120, 122 may transmit radio signals to and receive radio signals from the RFID tags 104. In an embodiment, the readers 106, 120, 122 may transmit radio signals to and receive radio signals from the RFID tags 104 in a cellular radio frequency band. It is understood that cellular radio frequency bands and/or segments of cellular radio frequency bands may be allocated to specific parties (e.g., cellular communication service providers such as AT&T, Verizon, T-Mobile, and others) and that these parties may be allowed to transmit radio signals at higher power levels in their allocated spectrum bands than is permitted in unlicensed radio spectrum bands, for example in the unlicensed ISM radio spectrum bands. Transmitting radio signals at higher power levels may promote improved reception of these signals and may promote communicating at greater distances than would be possible at lower radio transmission power levels.

In an embodiment, the system 100 relies upon one or more novel tactics and technology adaptations to improve the communication between the RFID tag readers 106, 120, 122 and the RFID tags 104. This improvement can entail successful communication at greater distances between the RFID tag readers 106, 120, 122 and RFID tags 104 and/or reduced communication error rates. In an embodiment, the radio transceiver 108, under control of the application 114, can cause the antenna 109 to establish a beam and steer the beam in a specific direction to improve communication with one or more of the RFID tags 104 in the environment 102. The application 114 may cause the beam of the antenna 109 to sweep directionally across or around the environment 102, progressively over time, so as to promote reading better and/or at a greater distance tag information from RFID tags 104 located at different positions within the environment 102. It may be that the application 114 can adapt the signal reception of the elements of the antenna 109, independently of the tactic of beam forming and beam steering, to improve reception of signals from RFID tags 104 (e.g., transmission of the RFID tag information 150).

In an embodiment, the RFID tags 104 are configured with pseudo-random number (PN) codes and the radio transceiver 142 of the RFID tags 104 modulate their information using the PN codes. The radio transceiver 108 of the RFID readers 106, 120, 122 can demodulate simultaneously received transmission from different RFID tags 104 that are modulated using different PN codes. This can increase the throughput of RFID tag readers 106, 120, 122 reading tag information from the RFID tags 104. This can help decrease radio interference among RFID tags 104 that transmit their information at the same time.

In an embodiment, the application 114 of the RFID tag readers 106, 120, 122 can determine that the radio environment 102 has changed and adapt to this change by employing frequency hopping techniques for communicating with the RFID tags 104. Alternatively, the RFID tag readers 106, 120, 122 can adapt by changing a radio frequency band used for communicating with the RFID tags 104 from a first radio frequency range to a second radio frequency range. In an embodiment, the RFID readers 106, 120, 122 may transmit electric power to RFID tags 104, in an electromagnetic field in the 860 MHz to 960 MHz range. In an embodiment, the RFID readers 106, 120, 122 may transmit electric power to RFID tags 104 in an electromagnetic field in the 862 MHz to 869 MHz frequency band. In an embodiment, the RFID readers 106, 120, 122 may transmit electric power to RFID tags 104 in an electromagnetic field in the 2.40 GHz to 2.55 GHz range. In an embodiment, the RFID readers 106, 120, 122 may transmit electric power to RFID tags 104 in an electromagnetic field in the 2.496 GHz to 2.5 GHz range. In an embodiment, the RFID readers 106, 120, 122 may transmit command messages to RFID tags 104 in the 860 MHz to 960 MHz range. In an embodiment, the RFID readers 106, 120, 122 may transmit command messages to RFID tags 104 in the 862 MHz to 869 MHz frequency band. In an embodiment, the RFID readers 106, 120, 122 may transmit command messages to RFID tags 104 in the 2.40 GHz to 2.55 GHz range. In an embodiment, the RFID readers 106, 120, 122 may transmit command messages to the RFID tags 104 in the 2.496 GHz to 2.5 GHz range.

Within each of the above identified frequency ranges, however, the RFID tag readers 106, 120, 122 can adapt the specific frequency for transmitting electric power and/or for transmitting command messages to RFID tags 104 to avoid interference and/or radio attenuation frequencies within the environment 102. Likewise, the RFID tag readers 106, 120, 122 can command the RFID tags 104 to transmit tag information 150 on different specific frequencies within the above identified frequency ranges to improve reception of tag information. Over time, conditions in the environment 102 may change transiently and impact radio communications in the environment 102. By dynamically detecting and adapting the specific frequency band being used by the RFID tag readers 106, 120, 122 and by the RFID tags 104 (e.g., in response to a command received by the RFID tags 104 from the readers 106, 120, 122), the communications in the environment 102 can be improved and the transient condition in the environment 102 overcome. A change in the environment 102 may be associated with opening of a loading dock door to receive a shipment of products, where the open loading dock door transiently alters patterns of radio signal propagation within the environment 102. A change in the environment 102 may be associated with movement of a fork lift within the environment 102 that transiently alters patterns of radio signal propagation within the environment 102. The changes in specific frequency employed by RFID tag readers 106, 120, 122 and/or employed by RFID tags 104 may be said to be an ad hoc change in frequencies.

In an embodiment, one or more of the RFID tag readers 106, 120, 122 may implement cellular picocell functionality. Said in other words, in addition to providing RFID tag reading functionality, one or more of the RFID tag readers 106, 120, 122 may additionally provide conventional cellular communication functionality for user devices such as smart phones, wearable computers, laptop computers, tablet computers, notebook computers, and/or Internet of Things (IoT) devices. When an RFID tag reader 106, 120, 122 operates as a RFID tag reader AND as a picocell, it may provide radio frequency fields that RFID tags 104 may harvest power from.

In an embodiment, the RFID tag readers 106, 120, 122 may intercommunicate with each other via the network 124 to collaborate in reading tag information 150 from the RFID tags 104. For example, the applications 114 of the RFID tag readers 106, 120,122 may develop a digital map or other representation of the environment 102 identifying respective coverage areas. The applications 114 may collaborate to allocate coverage areas and/or blocks of RFID tags 104 that each RFID tag reader 106, 120, 122 is responsible for canvasing. The applications 114 may likewise determine when any of the RFID tag readers 106, 120, 122 operating in the environment goes out of service (e.g., experiences a failure or crashes temporarily) and dynamically reallocate coverage areas and/or blocks of RFID tags 104 that the remaining RFID tag readers 106, 120, 122 are responsible for canvasing. In an embodiment, the RFID tag readers 106, 120, 122 may intercommunicate to establish a mesh network for moving tag information 150 from a receiving RFID tag reader 106, 120, 122 to a different RFID tag reader 106, 120, 122 that has a communication link to the network 124 and/or to the computer 126 and/or to the data store 130.

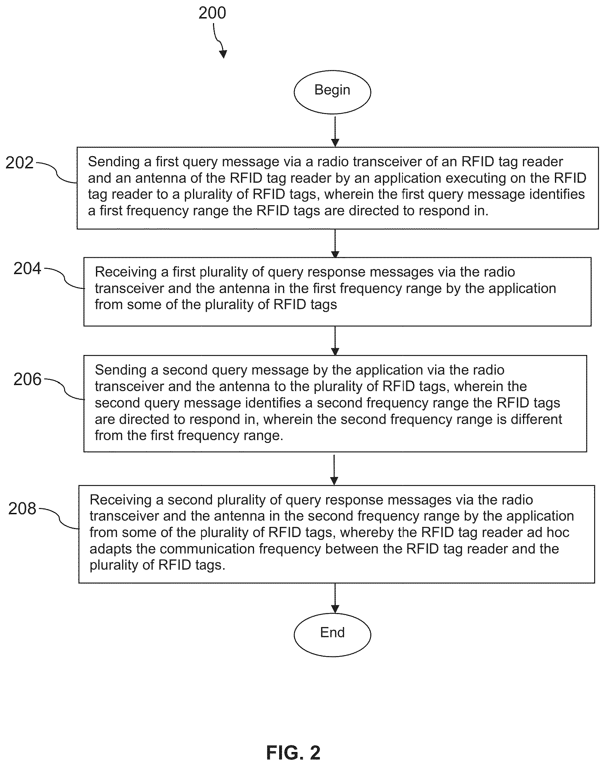

Turning now to FIG. 2, a method 200 is described. In an embodiment, the method 200 is a method of an RFID tag reader reading information from RFID tags. At block 202, the method 200 comprises sending a first query message via a radio transceiver of the RFID tag reader and an antenna of the RFID tag reader by an application executing on the RFID tag reader to a plurality of RFID tags, wherein the first query message identifies a first frequency range the RFID tags are directed to respond in. In an embodiment, the RFID tag reader has a radio transceiver that is configured to transmit and receive in a frequency band that lies within an 860 MHz to 960 MHz frequency range. In an embodiment, the radio transceiver is configured to transmit and receive in a frequency band that lies within an 860 MHz to 870 MHz frequency range. In an embodiment, the antenna of the RFID tag reader employs circular polarization. In an embodiment, the RFID tag reader provides picocell functionality to carry cellular communication service to user devices, for example to smart phones, wearable computers, headset computers, laptop computers, notebook computers, tablet computers, and Internet of things (IoT) devices.

At block 204, the method 200 comprises receiving a first plurality of query response messages via the radio transceiver and the antenna in the first frequency range by the RFID tag reader from some of the plurality of RFID tags. In an embodiment, the first query response messages comprise one or more of an identification of a product, an identity of an original equipment manufacturer of the product, a date of manufacture of the product, a receipt date of the product, and an electronic serial number of the product. At block 206, the method 200 comprises sending a second query message by the application via the radio transceiver and the antenna to the plurality of RFID tags, wherein the second query message identifies a second frequency range the RFID tags are directed to respond in, wherein the second frequency range is different from the first frequency range. At block 208, the method 200 comprises receiving a second plurality of query response messages via the radio transceiver and antenna in the second frequency range by the application from some of the plurality of RFID tags, whereby the RFID tag reader ad hoc adapts the communication frequency between the RFID tag reader and the plurality of RFID tags. In an embodiment, the application coordinates with other RFID tag readers to determine a changed condition in a radio environment shared by the RFID tag readers and to determines to adapt the communication frequency between the RFID tag reader and the plurality of RFID tags.

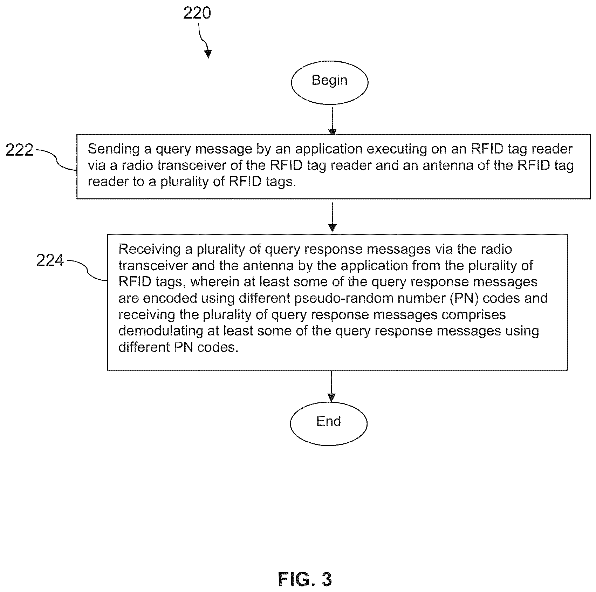

Turning now to FIG. 3, a method 220 is described. In an embodiment, the method 220 is a method of an RFID tag reader reading information from RFID tags. At block 222, the method 220 comprises sending a query message by an application executing on the RFID tag reader via a radio transceiver of the RFID tag reader and an antenna of the RFID tag reader to a plurality of RFID tags. In an embodiment, the antenna is configured to be directionally steered by the radio transceiver of the RFID tag reader. At block 224, the method 220 comprises receiving a plurality of query response messages via the radio transceiver and the antenna by the application from the plurality of RFID tags, wherein at least some of the query response messages are encoded using different pseudo-random number (PN) codes and receiving the plurality of query response messages comprises demodulating at least some of the query response messages using different PN codes. In an embodiment, at least some of the RFID tags are pre-configured with different PN codes. In an embodiment, the application sends command messages to configure different PN codes into at least some of the RFID tags. In an embodiment, the application transmits RFID tag information received in the query response messages to an inventory control system. In an embodiment, the RFID tag reader is communicatively coupled to a network via a wired communication link and transmits the RFID tag information via the wired communication link to the network and via the network to the inventory control system. In an embodiment, the RFID tag information comprises an identity of a product and a serial number of the RFID tag.

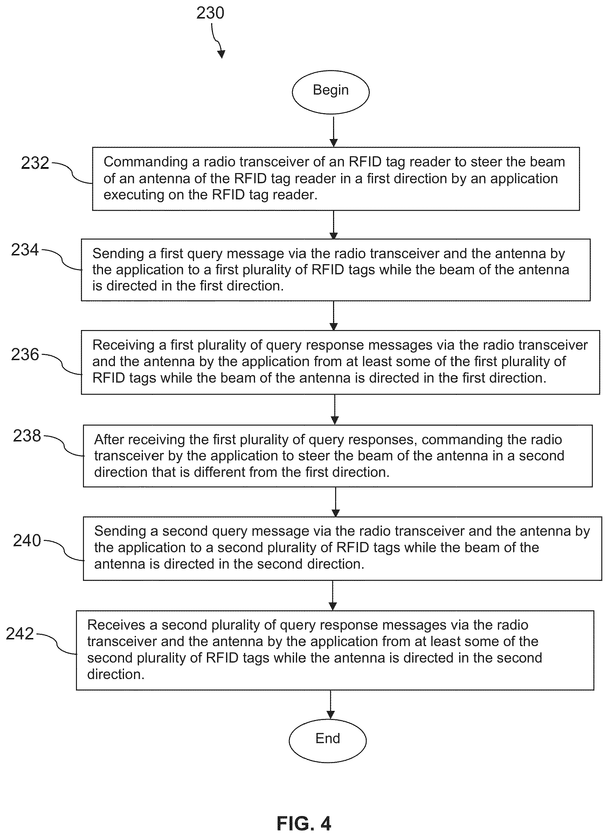

Turning now to FIG. 4, a method 230 is described. In an embodiment, the method 230 is a method of an RFID tag reader reading information from RFID tags. At block 232, the method 230 comprises commanding a radio transceiver of an RFID tag reader to steer a beam of an antenna of the RFID tag reader in a first direction by an application executing on the RFID tag reader. In an embodiment, the antenna comprises a plurality of antenna elements. In an embodiment, the antenna comprises between three antenna elements and nine antenna elements.

At block 234, the method 230 comprises sending a first query message via the radio transceiver and the antenna by the application to a first plurality of RFID tags while the beam of the antenna is directed in the first direction. At block 236, the method 230 comprises receiving a first plurality of query response messages via the radio transceiver and the antenna by the application from at least some of the first plurality of RFID tags while the beam of the antenna is directed in the first direction.

At block 238, the method 230 comprises, after receiving the first plurality of query responses, commanding the radio transceiver by the application to steer the beam of the antenna in a second direction that is different from the first direction. At block 240, the method 230 comprises sending a second query message via the radio transceiver and the antenna by the application to a second plurality of RFID tags while the beam of the antenna is directed in the second direction. At block 242, the method 230 comprises receiving a second plurality of query response messages via the radio transceiver and the antenna by the application from at least some of the second plurality of RFID tags while the antenna is directed in the second direction. In an embodiment, the application coordinates with other RFID tag readers to identify a coverage area assigned to the RFID tag reader executing the application and the application steers the beam of the antenna in the first direction and in the second direction so as to communicate with RFID tags located within the coverage area assigned to the RFID tag reader. In an embodiment, the application coordinates with another RFID tag reader to perform error correction of at least some of the query responses. In an embodiment, performing error correction comprises combining query responses received from the other RFID tag reader with at least some of the query responses received from RFID tags by the RFID tag reader, whereby to generate a correct and/or complete information content from one or more RFID tags. In an embodiment, the antenna employs circular polarization. In an embodiment, the RFID tag reader provides picocell functionality to carry cellular communication service to user devices, for example to smart phones, wearable computers, headset computers, laptop computers, tablet computers, notebook computers, and/or Internet of things (IoT) devices.

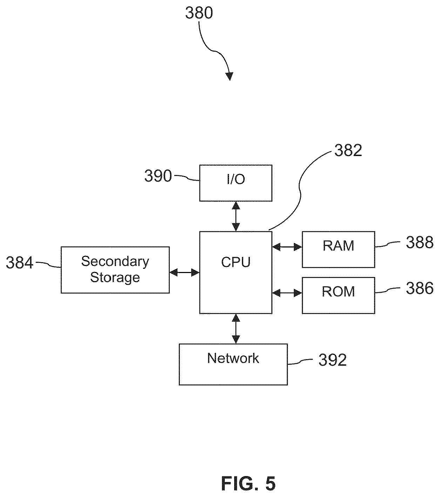

FIG. 5 illustrates a computer system 380 suitable for implementing one or more embodiments disclosed herein. The computer system 380 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB IoT), near field communications (NFC) and radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk-based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The processor 382 may process the executable instructions and/or data structures in part by directly accessing the computer program product, for example by reading from a CD-ROM disk inserted into a disk drive peripheral of the computer system 380. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. A radio frequency identity, RFID, tag reader, comprising:
an antenna;
a radio transceiver coupled to the antenna, wherein the radio transceiver is configured to transmit and receive in a cellular radio frequency band and is configured to control the antenna to steer a beam of the antenna;
a memory;
a processor coupled to the radio transceiver and to the memory; and
an application stored in a non-transitory portion of the memory that, when executed by the processor:
steers the beam of the antenna in a first direction sends a first query message via the radio transceiver and the antenna to a plurality of RFID tags;
receives a first plurality of query response messages via the radio transceiver and the antenna from at least some of the first plurality of RFID tags;
coordinates with a second RFID tag reader to identify a coverage area assigned to the RFID tag reader;
based on the coverage area assigned to the RFID tag reader, steers the beam of the antenna in a second direction so as to communicate with a second plurality of RFID tags located within the coverage area assigned to the RFID tag reader;
sends a second query message via the radio transceiver and the antenna to a second plurality of RFID tags while the beam of the antenna is directed in the second direction; and
receives a second plurality of query response messages via the radio transceiver and antenna from at least some of the second plurality of RFID tags while the antenna is directed in the second direction.

2. The RFID tag reader of claim 1, wherein the first plurality of query responses and the second plurality of query responses comprise RFID tag information, wherein each RFID tag information comprises an identity of a product and a serial number of an RFID tag.

3. The RFID tag reader of claim 1 or 2, wherein the application coordinates with a third RFID tag reader to perform error correction of at least some of the second plurality of query response messages, wherein performing error correction comprises combining a third plurality of query response messages received by the RFID tag reader from the third RFID tag reader with at least some of the second plurality of query response messages.

4. The RFID tag reader of any preceding claim, wherein the antenna employs circular polarization.

5. A radio frequency identity, RFID, tag reader, comprising:
an antenna;
a radio transceiver coupled to the antenna, wherein the radio transceiver is configured to transmit and receive in a cellular radio frequency band;
a memory;
a processor coupled to the radio transceiver and to the memory; and
an application stored in a non-transitory portion of the memory that, when executed by the processor:
sends a first query message via the radio transceiver and the antenna to a plurality of RFID tags; and
receives a first plurality of query response messages via the radio transceiver and antenna from the plurality of RFID tags, wherein at least some of the first plurality of query response messages are encoded using different pseudo-random number (PN) codes and receiving the first plurality of query response messages comprises demodulating at least some of the first plurality of query response messages using different PN codes.

6. The RFID tag reader of claim 5, wherein:
the plurality of RFID tags are pre-configured with different PN codes; or
the application sends command messages to configure different PN codes into the plurality of RFID tags.

7. The RFID tag reader of claim 5 or 6, wherein the antenna is configured to be directionally steered and wherein the radio transceiver is configured to control the antenna to steer a beam of the antenna.

8. The RFID tag reader of any one of claims 5 to 7, wherein the application, when executed by the processor,
commands the radio transceiver to steer the beam of the antenna in a first direction; sends a second query message via the radio transceiver and the antenna to a second plurality of RFID tags while the beam of the antenna is directed in the first direction;
receives a second plurality of query response messages via the radio transceiver and antenna from at least some of the second plurality of RFID tags while the beam of the antenna is directed in the first direction;
after receiving the second plurality of query responses, commands the radio transceiver to steer the beam of the antenna in a second direction that is different from the first direction;
sends a third query message via the radio transceiver and the antenna to a third plurality of RFID tags while the beam of the antenna is directed in the second direction; and
receives a third plurality of query response messages via the radio transceiver and antenna from at least some of the third plurality of RFID tags while the antenna is directed in the second direction.

9. A radio frequency identity, RFID, tag reader, comprising:
an antenna;
a radio transceiver coupled to the antenna, wherein the radio transceiver is configured to transmit and receive in a cellular radio frequency band;
a memory;
a processor coupled to the radio transceiver and to the memory; and
an application stored in a non-transitory portion of the memory that, when executed by the processor:
sends a first query message via the radio transceiver and the antenna to a plurality of RFID tags, wherein the first query message identifies a first frequency range the RFID tags are directed to respond in;
receives a first plurality of query response messages via the radio transceiver and antenna in the first frequency range from some of the plurality of RFID tags;
sends a second query message via the radio transceiver and the antenna to the plurality of RFID tags, wherein the second query message identifies a second frequency range the RFID tags are directed to respond in, wherein the second frequency range is different from the first frequency range; and
receives a second plurality of query response messages via the radio transceiver and antenna in the second frequency range from some of the plurality of RFID tags, whereby the RFID tag reader ad hoc adapts the communication frequency between the RFID tag reader and the plurality of RFID tags.

10. The RFID tag reader of claim 9, wherein the radio transceiver is configured to transmit and receive in a frequency band that lies within an 860 MHz to 960 MHz frequency range.

11. The RFID tag reader of claim 9, wherein the radio transceiver is configured to transmit and receive in a frequency band that lies within an 860 MHz to 870 MHz frequency range.

12. The RFID tag reader of any one of claims 9 to 11, wherein the first query response messages comprise one or more of an identification of a product, an identity of an original equipment manufacturer of the product, a date of manufacture of the product, a receipt date of the product, and an electronic serial number of the product.

13. The RFID tag reader of any one of claims 9 to 12, wherein the antenna employs circular polarization.

14. The RFID tag reader of any one of claims 9 to 13, wherein the RFID tag reader provides picocell functionality to carry cellular communication service to user devices.

15. The RFID tag reader of any one of claims 9 to 14, wherein the application coordinates with other RFID tag readers to determine a changed condition in a radio environment shared by the RFID tag readers and to determines to adapt the communication frequency between the RFID tag reader and the plurality of RFID tags.
